# DEMANDE DE BREVET EUROPEEN

(11) **EP 4 763 564 A1**
(43) Date de publication de la demande: **24.06.2026**
(21) Numéro de dépôt: 25222076.9
(22) Date de dépôt: 10.12.2025
(51) Int. Cl.: B60K 11/02, B60H 1/00, H01M 10/613, H01M 10/625, H01M 10/6568, H01M 10/6569

(54) **PROCÉDÉ DE REFROIDISSEMENT D'UNE BATTERIE D'ALIMENTATION, SYSTÈME DE REFROIDISSEMENT ET VÉHICULE AUTOMOBILE ASSOCIÉS**

(30) Priorité: 17.12.2024 FR 2414302
(71) Demandeur: Renault s.a.s, 92100 Boulogne Billancourt (FR)
(72) Inventeur: BRUNEAU, Stephane, 91150 LARDY (FR); DE BOCK, Thibault, 78280 GUYANCOURT (FR); L-HUILLIER, Jean-Marie, 78280 GUYANCOURT (FR); MONTI, Alessandro, 78280 GUYANCOURT (FR); PIARD, Christophe, 78280 GUYANCOURT (FR)

(57) **Abrégé**

Procédé de refroidissement d'une batterie (2000) d'un moteur (3000) d'un véhicule automobile comprenant un circuit frigorifique (100) incluant un premier évaporateur (110), un circuit d'huile diélectrique (200) comprenant un réservoir (210) contenant une huile diélectrique et des cellules (2100, 2200, 2300) de la batterie (2000) baignant dans l'huile diélectrique, le procédé étant caractérisé en ce qu'il comprend :
- Une circulation d'un fluide frigorigène par le circuit frigorifique (100) comprenant une évaporation du fluide frigorigène dans le premier évaporateur (110),
- Une circulation de l'huile diélectrique par le circuit d'huile diélectrique (200), comprenant :
∘ Une circulation de l'huile diélectrique dans le réservoir (210),
∘ Une circulation de l'huile diélectrique dans le premier évaporateur (110), comprenant un premier échange de chaleur, mis en œuvre par un échangeur de chaleur (111) du premier évaporateur (110), au cours de l'évaporation du fluide frigorigène, en prenant de l'énergie à l'huile diélectrique.

## Description

La présente invention concerne les batteries électriques d'alimentation des moteurs de propulsion des véhicules automobiles.

Ces batteries, en fonctionnement, peuvent produire une chaleur telle qu'un refroidissement puissant et efficace est nécessaire.

La demande de brevet publiée sous le numéro FR3126755 décrit un dispositif de gestion thermique pour véhicules électriques ou hybrides, comprenant trois circuits principaux : un circuit de refroidissement, un circuit de gestion thermique des batteries, et un circuit de gestion thermique de l'électronique de puissance.

La demande de brevet publiée sous le numéro FR3126754 décrit un dispositif de gestion thermique pour véhicules électriques ou hybrides. Ce dispositif utilise un échangeur de chaleur tri-fluide pour améliorer le refroidissement des éléments électriques et électroniques, comme les batteries et les ordinateurs embarqués. Le dispositif comprend trois circuits de fluides différents (réfrigérant, eau/glycolée, et fluide diélectrique), ce qui le rend relativement complexe et coûteux.

L'invention vise à répondre à cet objectif et a pour objet, selon l'un de ses aspects, un procédé de refroidissement d'une batterie d'alimentation d'un moteur de propulsion d'un véhicule automobile (mis en œuvre dans le véhicule automobile), le véhicule automobile comprenant (la batterie d'alimentation) un circuit d'huile diélectrique, un circuit frigorifique incluant un premier évaporateur, un réservoir contenant une huile diélectrique et des éléments baignant dans l'huile diélectrique, les éléments faisant partie de la batterie, le procédé étant caractérisé en ce qu'il comprend :
- Une première (mise en) circulation d'un fluide frigorigène par le circuit frigorifique comprenant une évaporation du fluide frigorigène dans le premier évaporateur,
- Une deuxième (mise en) circulation de l'huile diélectrique par le circuit d'huile diélectrique, la deuxième circulation de l'huile diélectrique comprenant :
   o Une (mise en) circulation de l'huile diélectrique dans le réservoir, depuis une entrée du réservoir jusqu'à une sortie du réservoir, au cours de laquelle l'huile diélectrique prend de l'énergie (autrement dit : de la chaleur) des éléments, puis
   o Une (mise en) circulation de l'huile diélectrique depuis une sortie du réservoir jusqu'à une entrée de l'évaporateur, puis
   o Une (mise en) circulation de l'huile diélectrique dans le premier évaporateur, depuis l'entrée du premier évaporateur jusqu'à une sortie du premier évaporateur, comprenant un premier échange de chaleur, mis en œuvre par un échangeur de chaleur du premier évaporateur, (au cours de l'évaporation du fluide frigorigène) au cours duquel le fluide frigorigène s'évapore dans le premier évaporateur en prenant de l'énergie (autrement dit : de la chaleur) à l'huile diélectrique, puis
   o Une (mise en) circulation de l'huile diélectrique depuis la sortie du premier évaporateur jusqu'à l'entrée du réservoir.

L'échange thermique direct entre l'huile diélectrique et le fluide frigorigène à l'intérieur de l'évaporateur permet d'obtenir un système thermique particulièrement simple, peu coûteux, puissant et efficace.

L'huile diélectrique pour le refroidissement d'une batterie d'alimentation d'un moteur de propulsion d'un véhicule automobile est connue de l'homme de métier.

Il existe un grand nombre de fluides frigorigènes qui peut comprendre, par exemple, du propane ou du dioxyde de carbone.

Par exemple, les éléments sont des cellules ou des parties de cellules de la batterie. Les éléments peuvent comprendre la batterie ou une partie de la batterie.

De manière classique, le circuit frigorifique comprend un compresseur, un condenseur, et un détendeur, et la première circulation comprend, (suite à l'évaporation du fluide frigorigène) :
- En sortie du premier évaporateur, une compression du fluide frigorigène, par le compresseur, (puis)
- Une condensation du fluide frigorigène, par le condensateur, la condensation comprenant un troisième échange de chaleur, mis en œuvre par un troisième échangeur de chaleur du condenseur, au cours duquel le fluide frigorigène se condense dans le condenseur en cédant de l'énergie (autrement dit : de la chaleur) (directement ou directement) à l'extérieur du véhicule automobile (autrement dit : à un environnement du véhicule automobile), par exemple à de l'air extérieure au véhicule, par exemple ventilée par un ventilateur. (puis)
- Une détente du fluide frigorigène, par le détendeur, et entrée du premier évaporateur.

Bien entendu, le circuit d'huile diélectrique peut comprendre une pompe (par exemple d'un débit maximum compris entre 3000 litres par heure et 5000 litres par heure) pour faire circuler l'huile diélectrique dans le circuit d'huile diélectrique, un conduit pour la circulation de l'huile diélectrique depuis la sortie du réservoir jusqu'à une entrée de l'évaporateur et/ou un conduit pour la circulation de l'huile diélectrique depuis la sortie du premier évaporateur jusqu'à l'entrée du réservoir.

Bien entendu, la première circulation et la deuxième circulation sont simultanées.

Selon un mode de réalisation, l'huile diélectrique circule dans un conduit d'une section inférieure à 150 millimètres carrés, au cours de la circulation de l'huile diélectrique dans le premier évaporateur, depuis l'entrée du premier évaporateur jusqu'à la sortie du premier évaporateur. Bien entendu, d'autres dimensions sont possibles pour ce conduit.

Selon un mode de réalisation, la deuxième circulation comprend une circulation de l'huile diélectrique depuis l'entrée du premier évaporateur jusqu'à la sortie du premier évaporateur à l'extérieur du premier évaporateur (sans passer par le premier évaporateur).

Ainsi, le circuit d'huile diélectrique comprend un contournement du premier évaporateur.

Lorsque l'huile diélectrique a une chaleur spécifique relativement faible (3 ou 4 fois moins élevée qu'un mélange éthylène glycol, par exemple), ce contournement permet un débit d'huile diélectrique important de circulation dans le premier réservoir, pour permettre un refroidissement suffisant des éléments, en utilisant un premier évaporateur standard acceptant un débit inférieur (par exemple, compris entre 3000 et 5000 litres par heure).

Selon un mode de réalisation, le circuit frigorigène comprenant un deuxième évaporateur, le procédé de refroidissement comprend un deuxième échange de chaleur, mis en œuvre par un deuxième échangeur de chaleur du deuxième évaporateur, au cours duquel le fluide frigorigène s'évapore dans le deuxième évaporateur en prenant de l'énergie (autrement dit : de la chaleur) en provenance d'un habitacle du véhicule automobile (par exemple, en provenance d'un air de l'habitacle, par exemple ventilé par le ventilateur) et/ou du moteur de propulsion du véhicule automobile.

Par exemple, le deuxième évaporateur est en parallèle du premier évaporateur dans le circuit frigorigène. Le circuit frigorigène comprend par exemple une ou plusieurs vannes pour orienter le fluide frigorigène vers le premier évaporateur et/ou le deuxième évaporateur.

D'autres montages du deuxième évaporateur, par rapport au premier évaporateur sont par exemple possibles.

Selon un mode de réalisation, le procédé de refroidissement est mis en œuvre pendant un rechargement de la batterie d'alimentation. En variante, le procédé selon l'invention peut être mis en œuvre à d'autres instants.

L'invention concerne également un système de refroidissement d'une batterie d'alimentation d'un moteur de propulsion d'un véhicule automobile, le système comprenant :
- Un réservoir contenant une huile diélectrique et des éléments baignant dans l'huile diélectrique, les éléments faisant partie de la batterie d'alimentation,
- Un circuit frigorifique incluant un premier évaporateur, le circuit frigorifique étant configuré pour (ou apte à) mettre en œuvre l'étape de première circulation du procédé de refroidissement selon l'invention,
- Un circuit d'huile diélectrique configuré pour (ou apte à) mettre en œuvre la deuxième circulation du procédé de refroidissement selon l'invention.

L'invention concerne aussi un véhicule automobile comprenant le système de refroidissement selon l'invention.

Les caractéristiques du système de refroidissement et du véhicule automobile sont identiques à celles du procédé de refroidissement mutatis mutandis, c'est pourquoi elles ne se pas répétées ici.

### Brève description des dessins

L'invention pourra être mieux comprise à la lecture de la description détaillée qui va suivre, d'exemples non limitatifs de mise en œuvre de celle-ci, et à l'examen des dessins annexés, sur lequel :
[Fig 1] est une représentation d'un système de refroidissement, selon un mode de réalisation de l'invention ;
[Fig 2] représente, pour faciliter la lecture, le circuit frigorifique du système de refroidissement de la figure 1 séparé du reste du système de refroidissement de la figure 1.
[Fig 3] représente, pour faciliter la lecture, le circuit d'huile diélectrique du système de refroidissement de la figure 1 séparé du reste du système de refroidissement de la figure 1.
[Fig 4] représente le procédé de refroidissement mis en œuvre par le système de refroidissement de la figure 1, selon un mode de réalisation de l'invention.

### Description détaillée

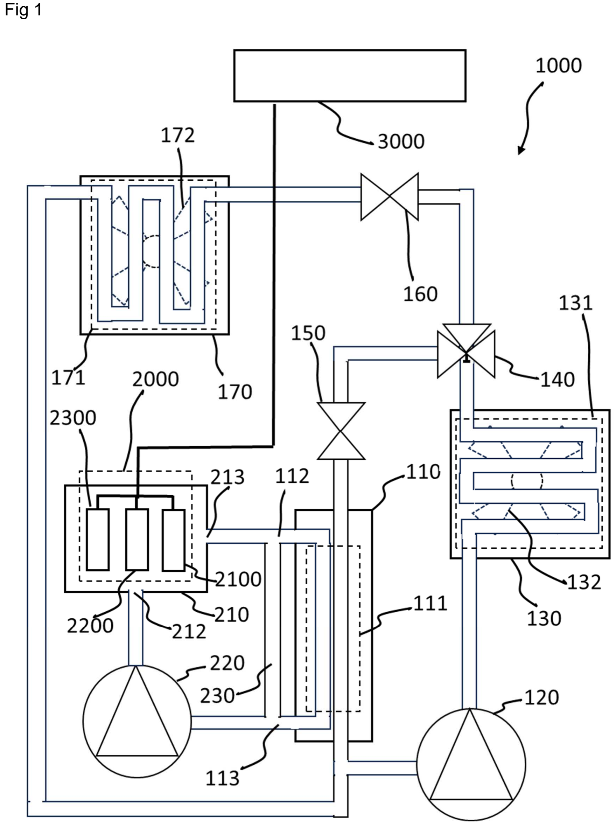

La figure 1 montre un système de refroidissement 1000 d'une batterie 2000. La batterie 2000 comprend des cellules 2100, 2200 et 2300. La batterie 2000 est une batterie d'alimentation d'un moteur de propulsion 3000 d'un véhicule automobile (non représenté).

Le système de refroidissement 1000 comprend :
- Un circuit frigorifique 100 incluant un premier évaporateur 110, et
- Un circuit d'huile diélectrique 200 comprenant un réservoir 210 contenant une huile diélectrique, les cellules 2100, 2200 et 2300 baignant dans l'huile diélectrique du réservoir 210.

La batterie 2000, le moteur de propulsion 3000 et le système de refroidissement 1000 sont à l'intérieur du véhicule automobile.

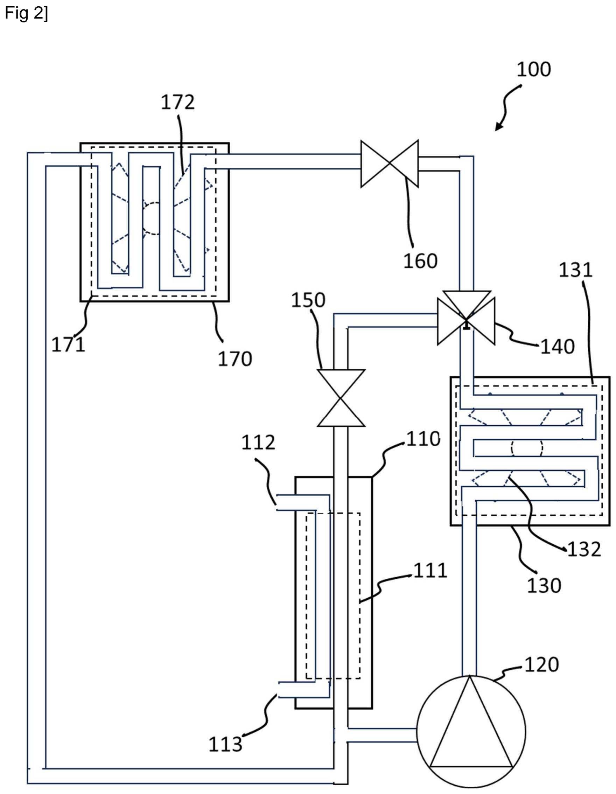

Figure 2, le circuit frigorifique 100 est représenté séparé du reste du système de refroidissement 1000 de la figure 1, pour faciliter la lecture. Le circuit frigorifique 100 comprend, classiquement, un évaporateur 110, un compresseur 120, un condenseur 130, un détendeur 150 et un détendeur 160.

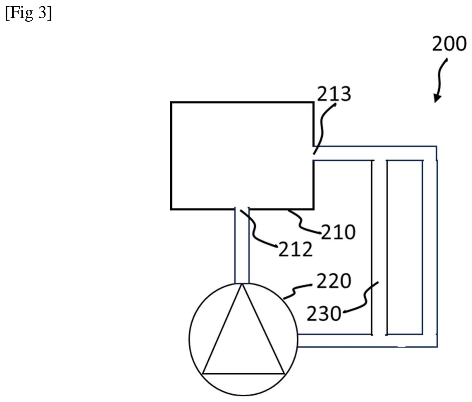

Figure 3, le circuit d'huile diélectrique 200 est représenté séparé du reste du système de refroidissement 1000 de la figure 1, pour faciliter la lecture. Le circuit d'huile diélectrique 200 comprend une pompe 220.

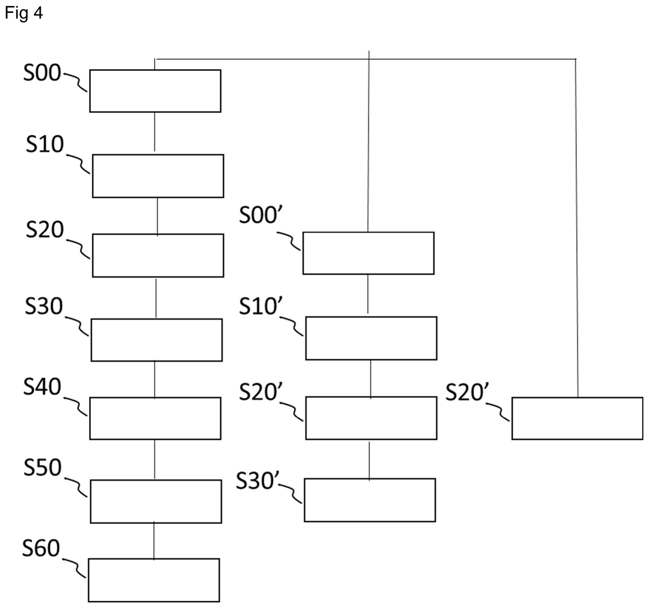

La figure 4 représente les différents traitements, mis en œuvre par le système de refroidissement 1000, sur une portion de propane circulant dans le circuit frigorifique 100 et une portion d'huile diélectrique circulant dans le circuit d'huile diélectrique 200.

A l'étape S00, une portion de propane circulant dans le circuit frigorifique 100 est compressée par le compresseur 120.

A l'étape S10, la portion de propane est condensée par le condensateur 130 en cédant sa chaleur à de l'air extérieure au véhicule ventilée par un ventilateur 132, par l'intermédiaire de l'échangeur 131.

A l'étape S20, la portion de propane est orientée vers le détendeur 150 par la vanne trois voies 140.

A l'étape S30, la portion de propane est détendue par le détendeur 150.

A l'étape S40, la portion de propane est évaporée par l'évaporateur 110.

A l'étape S00', une portion d'huile diélectrique est pompée vers l'entrée 212 du réservoir 210 par la pompe 220.

A l'étape S10', la portion d'huile diélectrique circule dans le réservoir 210 de l'entrée 212 du réservoir 210 jusqu'à la sortie 213 du réservoir 210, et prend de la chaleur des cellules 2100, 2200 et 2300.

A l'étape S20', une première partie de la portion d'huile diélectrique circule dans l'évaporateur, depuis l'entrée 112 de l'évaporateur 110 jusqu'à la sortie 113 de l'évaporateur 110, dans un conduit d'une section de 130 millimètres carrés.

Durant l'étape S40, et S20', qui sont mis en œuvre en parallèle, la portion de propane vaporisée prend la chaleur de la première partie de la portion d'huile diélectrique par l'intermédiaire de l'échangeur de chaleur 111 de l'évaporateur 110.

A l'étape S20", simultanée à l'étape S20' (et donc simultanée à l'étape S40), une deuxième partie de la portion d'huile diélectrique circule depuis l'entrée 112 jusqu'à la sortie 113 par l'intermédiaire du contournement 230. Lorsque l'huile diélectrique a une chaleur spécifique relativement faible (3 ou 4 fois moins élevée qu'un mélange éthylène glycol, par exemple), ce contournement 230 permet un débit d'huile diélectrique important de circulation dans le premier réservoir 210, pour permettre un refroidissement suffisant des cellules 2100, 2200, 2300, en utilisant un premier évaporateur 111 standard acceptant un débit inférieur.

A l'étape S30', la portion d'huile diélectrique circule depuis la sortie 113 de l'évaporateur 110 jusqu'à l'entrée du réservoir 212.

Bien entendu, les étapes S10 à S40 sont répétées pour la portion de propane et les étapes S00' à S30', et S20" sont répétées pour la portion d'huile diélectrique.

Les étapes ci-dessous peuvent mises en œuvre durant un rechargement de la batterie d'alimentation 2000.

Également, après le rechargement de la batterie d'alimentation 2000, à l'étape S50, la vanne trois voies 140 peut orienter la portion de propane vers l'évaporateur 170 comprenant l'échangeur 171, par exemple à la place de l'orienter vers l'évaporateur 110 (en variante, les deux évaporateurs peuvent fonctionner en parallèle). Le propane prend alors, à l'étape S60, par l'intermédiaire de l'échangeur 171, la chaleur d'un air d'un l'habitacle du véhicule automobile, ventilé par le ventilateur 172.

## Revendications

1. Procédé de refroidissement d'une batterie d'alimentation (2000) d'un moteur de propulsion (3000) d'un véhicule automobile, le véhicule automobile comprenant un circuit d'huile diélectrique (200), un circuit frigorifique (100) incluant un premier évaporateur (110), un réservoir (210) contenant une huile diélectrique et des éléments (2100, 2200, 2300) baignant dans l'huile diélectrique, les éléments (2100, 2200, 2300) faisant partie de la batterie d'alimentation (2000), le procédé étant **caractérisé en ce qu'**il comprend :
- Une première circulation d'un fluide frigorigène par le circuit frigorifique (100) comprenant une évaporation du fluide frigorigène dans le premier évaporateur (110),
- Une deuxième circulation de l'huile diélectrique par le circuit d'huile diélectrique (200), comprenant :
o Une circulation de l'huile diélectrique dans le réservoir (210), depuis une entrée (212) du réservoir (210) jusqu'à une sortie (213) du réservoir (210),
o Une circulation de l'huile diélectrique depuis la sortie (213) du réservoir (210) jusqu'à une entrée (112) de le premier évaporateur (110),
o Une circulation de l'huile diélectrique dans le premier évaporateur (110), depuis l'entrée (112) du premier évaporateur (110) jusqu'à une sortie (113) du premier évaporateur (110), comprenant un premier échange de chaleur, mis en œuvre par un échangeur de chaleur (111) du premier évaporateur (110), au cours duquel le fluide frigorigène s'évapore dans le premier évaporateur en prenant de l'énergie à l'huile diélectrique,
o Une circulation de l'huile diélectrique depuis la sortie (113) du premier évaporateur (110) jusqu'à l'entrée du réservoir (212).

2. Procédé de refroidissement selon la revendication précédente, dans lequel l'huile diélectrique circule dans un conduit d'une section inférieure à 150 millimètres carrés, au cours de la circulation de l'huile diélectrique dans le premier évaporateur (110), depuis l'entrée (112) du premier évaporateur (110) jusqu'à la sortie (113) du premier évaporateur (110).

3. Procédé de refroidissement selon l'une quelconque des revendications précédentes, dans lequel la deuxième circulation comprend une circulation de l'huile diélectrique depuis l'entrée (112) du premier évaporateur (110) jusqu'à la sortie (113) du premier évaporateur (110), à l'extérieur du premier évaporateur (110) (.

4. Procédé de refroidissement selon l'une quelconque des revendications précédentes, le circuit frigorigène comprenant un deuxième évaporateur (170), le procédé de refroidissement comprenant un deuxième échange de chaleur, mis en œuvre par un deuxième échangeur de chaleur (172) du deuxième évaporateur (170), au cours duquel le fluide frigorigène s'évapore dans le deuxième évaporateur (170) en prenant de l'énergie en provenance d'un habitacle du véhicule automobile ou du moteur de propulsion (3000) du véhicule automobile.

5. Procédé de refroidissement selon l'une quelconque des revendications précédentes mis en œuvre pendant un rechargement de la batterie d'alimentation (2000).

6. Système de refroidissement (1000) d'une batterie d'alimentation (2000) d'un moteur de propulsion (3000) d'un véhicule automobile, le système comprenant :
- Un réservoir (210) contenant une huile diélectrique et des éléments (2100, 2200, 2300) baignant dans l'huile diélectrique, les éléments (2100, 2200, 2300) faisant partie de la batterie d'alimentation (2000),
- Un circuit frigorifique (100) incluant un premier évaporateur (110), le circuit frigorifique (100) étant configuré pour mettre en œuvre la première circulation du procédé de refroidissement selon l'une quelconque des revendications 1 à 5,
- Un circuit d'huile diélectrique (200) configuré pour mettre en œuvre la deuxième circulation du procédé de refroidissement selon l'une quelconque des revendications 1 à 5.

7. Véhicule automobile comprenant le système de refroidissement (1000) selon la revendication précédente.
